# EUROPEAN PATENT APPLICATION

(11) **EP 2 282 168 A1**
(43) Date of publication of application: **09.02.2011**
(21) Application number: 09166732.9
(22) Date of filing: 29.07.2009
(51) Int. Cl.: G01C 21/26, G01C 21/20, G01C 21/34, G08G 1/0968, G08G 1/123

(54) **Mobile phone arrival time estimator**

(71) Applicant: RESEARCH IN MOTION LIMITED, Waterloo, Ontario N2L 3W8 (CA)
(72) Inventor: Bos, Jeffrey, Charles, Waterloo Ontario N2L 3X2 (CA)
(74) Representative: MERH-IP Matias Erny Reichl Hoffmann

(57) **Abstract**

A method and mobile device for providing a meeting place for two mobile devices and arrival time of at least one of the mobile devices at the meeting place is provided. A first mobile device receives location information for a second mobile device and determines location information itself. Then, the first mobile device determines a meeting place based on the location information of the first mobile device and the location information of the second mobile device. Next, an approximate time for the first mobile device to travel to the meeting place is calculated and output, together with the location of the meeting, to a user interface on the first mobile device.

## Description

### Technical Field

The present application relates to a method for and mobile device configured to determine a meeting place and an approximate time to travel to the meeting place.

### Background

Many mobile devices have location determination systems that provide a present location of the mobile device. Most of these devices also have map applications that can display the present location on a map and in some cases, display the location of points of interest (POIs) designated as such by a user.

There are some applications available for displaying the location of people on a list, such as a buddy list or a list of members of a group. In these applications, the members of the group share their location information on an ongoing or periodic basis. One such application is Buddy Beacon™, which uses GPS (Global Positioning System) information. In another such application, Garmin Rhino™ handhelds can provide GPS location information for other Rhino users communicating on the same RF channel.

Users of mobile devices sometimes want to meet with each other in person. The users may decide to meet at a location at a certain time. However, it may take one user longer to reach the location than the other user or the users may not be aware of how long it will actually take to reach the meeting place. Furthermore, the users may be unaware of POIs between their locations.

### Summary

In one aspect of the present invention, there is provided, a method in a first mobile device, the method comprising: receiving location information for a second mobile device; determining location information for the first mobile device; determining a meeting place based on the location information of the first mobile device and the location information of the second mobile device; calculating an approximate time for the first mobile device to travel to the meeting place; and outputting the approximate time and a location of the meeting place to a user interface on the first mobile device.

In an embodiment, the method further comprises displaying the meeting place on a map on a display on the first mobile device.

In an embodiment, the method further comprises receiving an indication of a planned speed of travel of the first mobile device and wherein calculating the approximate time to travel comprises determining a route from the present location to the meeting place, determining the length of the route and determining the time required at the planned speed to arrive at the meeting place.

In an embodiment, the method further comprises receiving an indication of a planned speed of travel of the second mobile device and the determining the meeting place is based at least on the planned speed of travel of the first mobile device and the planned speed of travel of the second mobile device.

In an embodiment, determining the meeting place comprises selecting at least one of a present location of the second mobile device, a location identified as a position of interest in a map application on the first mobile device, and a location approximately at a midpoint between the present location of the first mobile device and a present location of the second mobile device.

In an embodiment, determining the location information for the first mobile device comprises requesting the location information for the first mobile device from a location determination system.

In an embodiment, determining the location information for the first mobile device comprises a global positioning system (GPS)chipset on the mobile device receiving the location information for the first mobile device from a plurality of G PS satellites.

The method of any one of claims 1 to 8, wherein receiving the location information for the second mobile device comprises receiving the respective location information during a voice call.

In an embodiment, receiving the location information for the second mobile device comprises receiving the location information for the second mobile device in a data message over a wireless network.

In an embodiment, the method further comprises receiving updated location information for the first mobile device at a later time and calculating an updated travel time to the meeting place based on the updated location information.

In another aspect, there is provided a mobile device comprising: a receiver for receiving location information for another mobile device; a location determination system for providing location information for the mobile device; a processor configured to determine a meeting place based on the location information of the mobile device and the location information of the other mobile device and to calculate an approximate time for the mobile device to travel to the meeting place; and a user interface for outputting the approximate time and a location of the meeting place.

In an embodiment, the user interface is a display.

In an embodiment, the display is also used for displaying the location of the meeting place on a map.

In an embodiment, the processor is further configured to implement a map application for displaying maps on the user interface.

In an embodiment, the location determination system is a Global Positioning System (GPS).

In an embodiment, the receiver is an antenna for receiving data over a wireless network.

In an embodiment, the mobile device further comprises another receiver for receiving audio information over a wireless network concurrently with the mobile device receiving the location information for the other mobile device and a transmitter for transmitting audio information over the wireless network.

In another aspect, there is provided at least one tangible computer readable medium having computer readable instructions stored thereon that, when executed, implement a method in a first mobile device, the method comprising: receiving location information for a second mobile device; determining location information for the first mobile device; determining a meeting place based on the location information of the first mobile device and the location information of the second mobile device; calculating an approximate time for the first mobile device to travel to the meeting place; and outputting the approximate time and a location of the meeting place to a user interface on the first mobile device.

### Brief Description of the Drawings

Examples of embodiments will now be described in greater detail with reference to the accompanying drawings, in which:
Figure 1 is flowchart of a method according to one embodiment;
Figure 2 is flowchart of a method according to one embodiment;
Figure 3 is a block diagram of a mobile device according to one embodiment; and
Figure 4 is a screen shot of an exemplary implementation;
Figure 5 is a system diagram of network components for use with the methods described herein;
Figure 6 is a block diagram of a mobile device on which the methods described herein may be executed.

### Detailed Description

In general, there is provided a method of estimating a time of arrival of parties wishing to meet at a meeting place based on geographic positions of the parties. For example, during a voice call, the estimated time may be calculated based on distance, and possibly a mode of conveyance or speed, and a suggested meeting time based on this estimate may be provided. It is also possible for this solution to recommend a point of interest (POI) between parties and suggest or schedule the meeting for this POI. A map application may also be integrated with this solution to provide graphical map/navigation support.

In an exemplary implementation, mobile devices with location determination systems, such GPS (Global Positioning System) embedded phones, can calculate the position and distance between the mobile devices, determine a meeting place and estimate an amount of travel time using a street map database.

In one embodiment, during a voice call an Arrival Time Estimator can exchange Latitude/Longitude GPS data and calculate a time to meet. For example, one user could initiate a meeting request using the Phone Menu and if the other user accepts, the Arrival Time Estimator could calculate the point-to-point travel time between the participants. The Arrival Time Estimator can, in some embodiments, optionally provide a list of recommended meeting location options (for example, Points of Interest (POIs) at an equal distance from each participants) and calculate the meeting time based on distance between participants and the proposed meeting location. In still further embodiments, the Arrival Time Estimator can link to a map application on the mobile device to provide navigation instructions to the recommended meeting location.

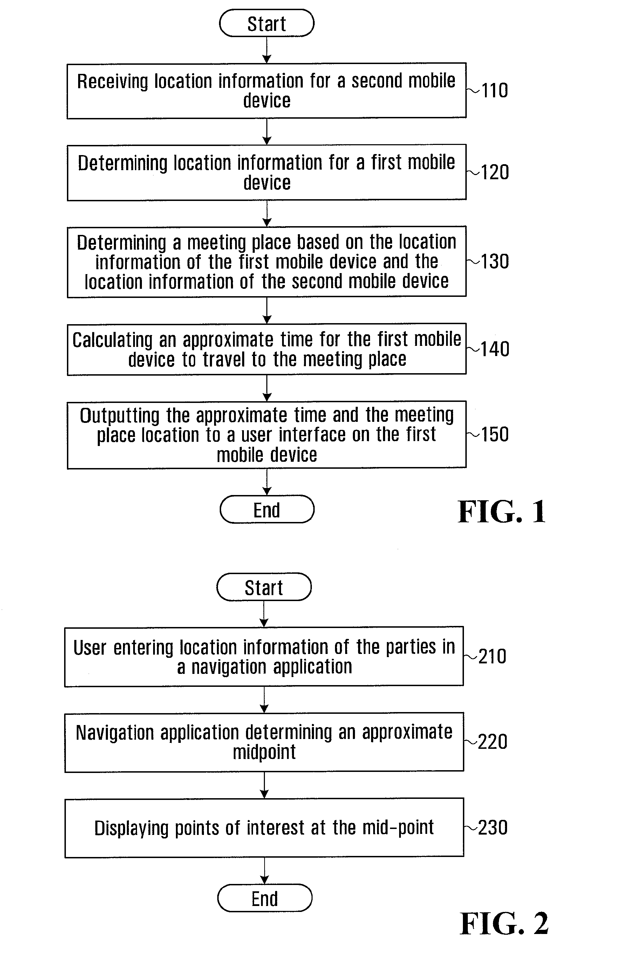

Referring now to Figure 1, a method will be described. The method is executed in a first mobile device.

At step 110, the method starts with receiving location information for a second mobile device. Non-limiting examples of location information are latitude and longitude coordinates, a civic address, and a location identifier. In some embodiments, this step 110 comprises receiving the respective location information during a voice call. In some implementations, the location information for the second mobile device is received in a data message over a wireless network. In some embodiments, position information is broadcast between mobile devices or potentially to a web client on a computer using IP (Internet Protocol) and wireless transmission protocols.

At step 120, the method continues with determining location information for the first mobile device. In some embodiments, this step 120 comprises requesting the location information for the first mobile device from a location determination system. In some embodiments, determining the location information for the first mobile device comprises a global positioning system (GPS)chipset on the mobile device receiving the location information for the first mobile device from a plurality of GPS satellites.

Next, the method continues with determining a meeting place based on the location information of the first mobile device and the location information of the second mobile device (Step 130). In some embodiments, this step involves determining a midpoint between the present location of the first mobile device and the present location of the second mobile device. In another exemplary implementation, if it is known that the second mobile device will remain stationary, the meeting place can be determined to be the present location of the second mobile device. In other implementations, the first mobile device maintains a list of POIs and selects one of the POIs that is between the present location of the first mobile device and the present location of the second mobile device. Likewise, POIs near the midpoint can be presented on a user interface for selection by a user. Determining the meeting place in some embodiments comprises selecting at least one of a present location of the second mobile device, a location identified as a point of interest in a map application on the first mobile device, and a location approximately at a midpoint between the present location of the first mobile device and a present location of the second mobile device. In another alternative implementation, the first mobile device determines one or more meeting place options and presents the options on a user interface for selection by a user.

The next step 140 comprises calculating an approximate time for the first mobile device to travel to the meeting place. The calculation of the approximate time, in some embodiments, is based on a presumed route to the meeting place from the present location of the first mobile device and a presumed speed of the first mobile device. For example, the presumed speed can be the speed limit for the roads along the presumed route. In other applications a user inputs an intended speed. In still other applications the user inputs or selects a mode of travel and the mobile device determines an appropriate speed associated with the mode of travel. In some embodiments, a map application is used to determine the route. The route may be determined based on the shortest route, the fastest route or the route with the least traffic. Of course any suitable means can be used to determine a route. The route can be displayed on a map on the mobile device in some applications.

In some embodiments, the steps of the method take place while a voice call continues. For example, if two or more users decide to meet during a voice call, at least one of the users can initiate a request to set up a meeting place. If location sharing is not already taking place, the location(s) of the other user(s) in the voice call is requested and received at the mobile device of the user that initiated the request. Once a meeting place is calculated, it can be shared with the other mobile devices of users participating in the call. In some embodiments, there is an option to accept or reject the calculated meeting place.

In other applications, the method further comprises receiving an indication of a planned speed of travel of the first mobile device. Then, calculating the approximate time to travel can comprise determining a route from the present location to the meeting place, determining the length of the route and determining the time required at the planned speed to arrive at the meeting place. The indication of the planned speed of travel may be received through a user interface. In some embodiments, options for speed or mode of travel may be presented on a user interface, such as a drop down menu. Examples of such options are specific speeds, walking, running, cycling, and driving. Furthermore, in some embodiments, the method further comprises receiving an indication of a planned speed of travel of the second mobile device and then determining the meeting place based at least on the planned speed of travel of the first mobile device and the planned speed of travel of the second mobile device. For example, if the planned speed of travel of the first mobile device is a driving speed and the planned speed of travel of the second mobile device is a walking speed, the meeting place determined could be closer to the present location of the second mobile device.

At step 150, the approximate time and the meeting place location are output to a user interface on the mobile device. In some embodiments, the approximate time and the meeting place location are displayed on a display screen on the first mobile device. In other embodiments, it is converted to an audio signal that is output to a speaker on the mobile device. In other embodiments, the time and location are output to a printer. In other embodiments the time and location are output for transmission to the second mobile device. In other embodiments, an option is presented through the user interface to accept or reject the meeting place location.

In an additional embodiment, an estimate of the arrival time for the second mobile device is calculated and provided. This can be provided with the approximate arrival time of the first mobile device initially or on demand at any time. For example, if the first mobile device arrives at the meeting location in advance of the second mobile device, the approximate arrival time of the second mobile device can be calculated and provided on a display of the first mobile device. In some embodiments, the names and ETA (Estimated Time of Arrival) for each participant for an in-person meeting can be provided.

In some embodiments, the method further comprises displaying the meeting place on a map on a display on the mobile device. In exemplary embodiments, a location determination system chipset on the mobile device can be used to provide navigational directions from the present location of the first mobile device to the meeting place.

Some embodiments of determining the meeting place comprise selecting at least one of a present location of the second mobile device, a location identified as a position of interest in a map application on the first mobile device, and a location approximately at a midpoint between the present location of the first mobile device and a present location of the second mobile device.

In a further embodiment, the method further comprises receiving updated location information for the first mobile device at a later time and calculating an updated travel time to the meeting place based on the updated location information. This updated travel time can then be output to the user interface. The updating can be implemented on a periodic basis.

Referring now to Figure 2, an exemplary method of identifying a meeting point between parties who are located at different geographical locations will be described. Step 210 involves a user entering location information of the parties and optionally, a business of interest, in a navigation application. At step 220, the navigation application determines an approximate mid-point between entered locations. Then at step 230 the navigation application displays points of interest at the mid-point location.

The methods described herein may be implemented using hardware, software, firmware or combinations therefore. In some embodiments, the method is implemented on at least one tangible computer readable medium having computer readable instructions stored thereon that, when executed, implement the respective method. In an exemplary embodiment, the computer readable medium is a memory in the first mobile device.

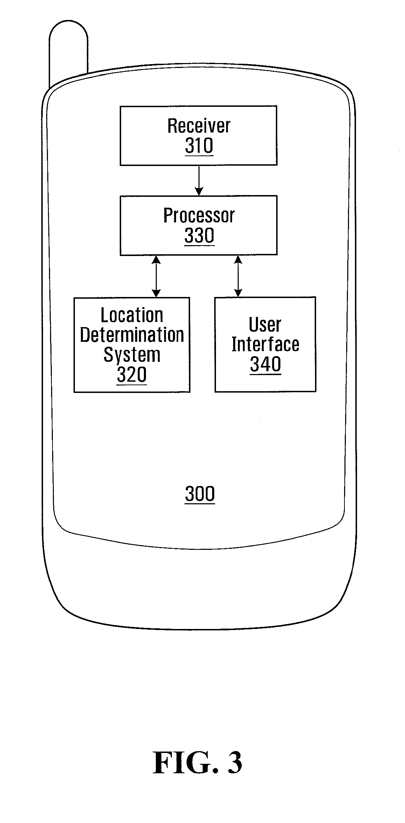

Referring now to Figure 3, a mobile device 300 will now be described. The mobile device 300 comprises a receiver 310, a processor 330, a location determination system 320 and a user interface 340.

The receiver 310 is configured to receive location information for another mobile device. In some embodiments, the receiver is an antenna for receiving data over a wireless network. Other non-limiting examples of the receiver are a port to interface with external devices and an antenna for receiving voice calls.

The location determination system 320 is configured to provide location information for the mobile device. Examplary implementations of the location determination system are a GPS chipset, an A-GPS (Augmented-GPS), a GLONAS receiver, and a system for determining position based on RF triangulation.

The location determination system 320 is configured to provide location information for the mobile device. Exemplary implementations of the location determination system are a position broadcast system such as a global positioning satellite (GPS) system receiver chipset to receive and decode satellite position broadcast signals, an A-GPS (Augmented-GPS), a BLONAS receiver, or cellular radio based systems that determine mobile handset position estimates based on detecting and processing certain radio signal characteristics received by the mobile handset from the public land mobile network (PLMN) that it is camped on or using to communicate over. These radio signal characteristics include time of arrival (TOA), received signal strength (RSSI), timing advance (TA), cell tower ID location used to perform location calculations such as triangulation.

The user interface 340 is configured to output the approximate time. Non-limiting examples of the user interface are a display and a speaker. A display can be used for displaying the meeting place on a map.

In some embodiments, the mobile device 300 further comprises another receiver for receiving audio information over a wireless network concurrently with the mobile device receiving the location information for the second mobile device and a transmitter for transmitting audio information over the wireless network.

In some embodiments, the mobile device 300 also comprises at least one tangible computer readable medium having computer readable instructions stored thereon that are executable by the processor 330 to determine the meeting place and calculate the arrival time.

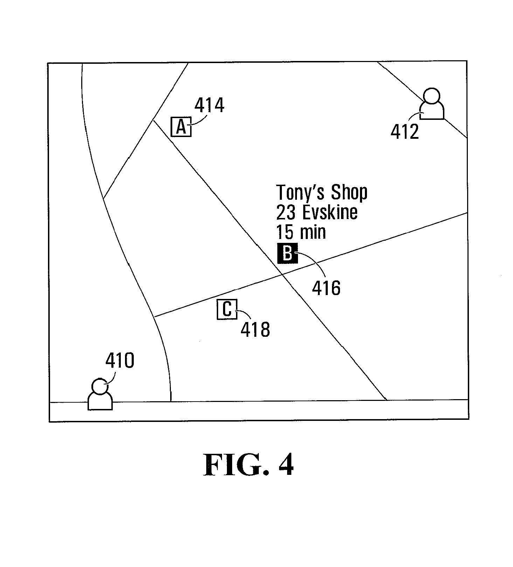

Figure 4 is a screen shot of an example of an output on a display in one embodiment. A caller's location 410 is shown, as well as a called party's location 412. In this example, three possible meeting places (meeting place A 414, meeting place B 416, and meeting place C 418) have been calculated and displayed for selection by one or more of the parties to the call. In the example shown, rolling over a location causes an address to be displayed. In this example, the address of meeting place B 416 is displayed, together with an approximate time to travel to the meeting place B: Tony's Shop, 23 Erskine, 15 minutes. The approximate time to travel can be from the caller's location 410 or from the called party's location 412. The caller or the called party can select one of the three meeting places and the selection can be transmitted to the mobile device of the other parties.

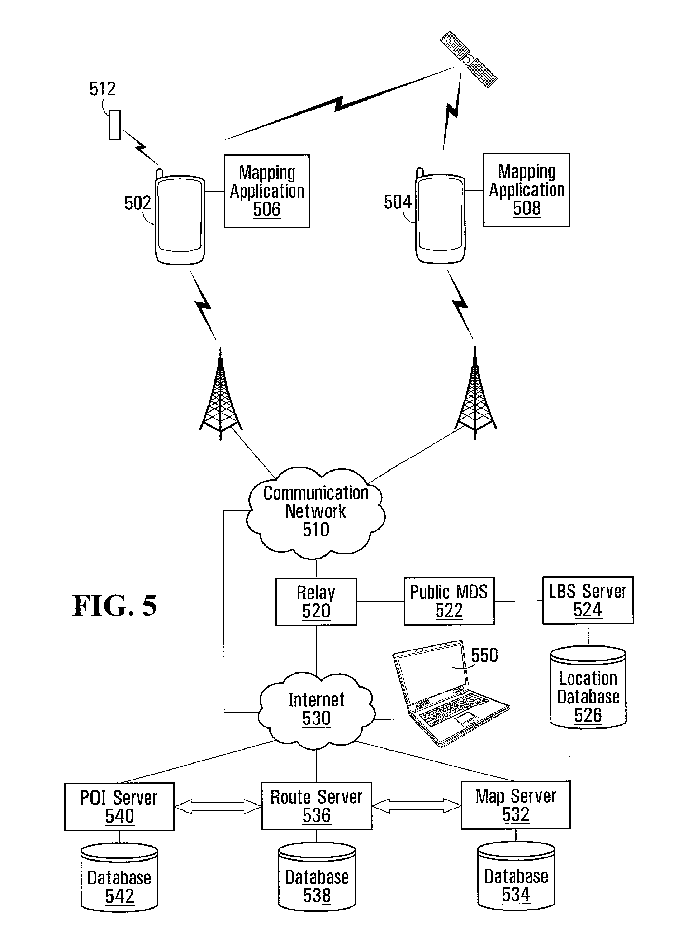

FIG. 5 depicts pertinent components of the communication system within which the methods described herein may be performed.

Mobile communication devices 502, 504 having mapping application 506, 508 are adapted to interoperate with a system of network components which provide mapping functionality in the mobile communication devices. The mobile communications devices 502, 504 operate over a Public Land Mobile Network (PLMN), or simply a carrier network 510. Alternatively, one of the parties to a call may be using a mobile communication device but without the predetermined mapping application functionality installed therein. To permit use of the mapping application during a telephone conversation, a wired headset or a wireless headset, such as for example, a Bluetooth™ wireless type headset 512 is preferably employed.

A mapping application 506, 508 is also provided in memory of each mobile communication device 502, 504 for rendering of visual maps in its display. Mobile communication devices 502, 504, are connected over a mobile carrier network 512, for communication to a relay 520 which preferably occurs through a firewall (not shown). A request for map data from any one of the mobile communication devices 502, 504 is received at relay 520 and passed via a secure channel to a public mobile data system (MDS) server 522. The request is then passed to a public location-based service (LBS) server 524 which provides location-based services (LBS) to handle the request. The network may include a plurality of such LBS servers where requests are distributed and processed through a load distributing server. The LBS data may be stored on this LBS server 524 in a location database 526, or may be stored on a separate LBS data server (not shown). Private corporate data stored on a corporate LBS server (not shown) may be added to the public data via a corporate MDS server on a secure return path to one of the mobile communication devices 502, 504. Alternatively, where no corporate servers are provided to support LBS services for a particular enterprise, for example individual consumer handsets, the request from a mobile station 502, 504 may be passed via relay 502 over a computer or communication network such as the Internet 530, a map server 532 having one or more accessible databases 534, a route server 536 having one or more accessible databases 538, and a POI server 540 having one or more accessible databases 542. Route server 536 and public map server 532 are publicly accessible or public servers. Public map server 532 may be any suitable publicly-accessible map server, such as one provided by Yahoo, Expedia, Google, to name but a few. Preferably, public map server 532 provides for interactive map functionality.

Also, one of the parties may be in communication with a mobile communications device using Voice over Internet Protocol VoIP/SIP (Session Initiation Protocol) conversation from a computer device 550, such as a PC (desktop or laptop), connected to the Internet 530. Alternately, a meeting link may be sent to or accessible from a computer device 550, again, such as a PC (desktop or laptop), with or without the predetermined mapping application installed therein, connected to the Internet 550.

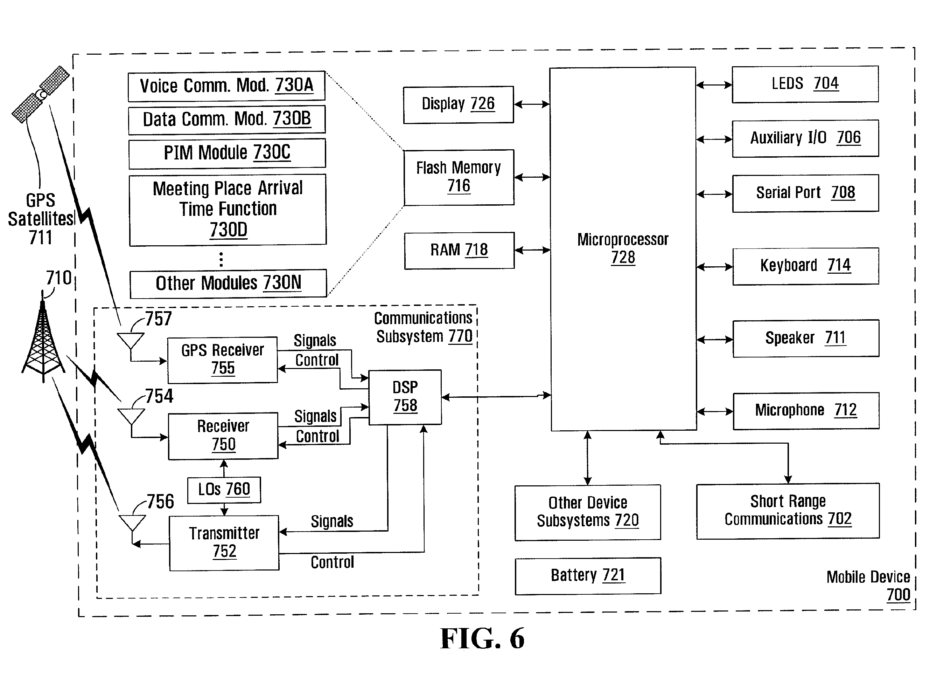

Referring now to Figure 6, shown is a block diagram of another mobile device 700 that may implement any of the methods described herein. It is to be understood that the mobile device 700 is shown with very specific details for example purposes only.

A processing device (a microprocessor 728) is shown schematically as coupled between a keyboard 714 and a display 726. The display 726 is a non-limiting example of the user interface 340 described with reference to Figure 3. The microprocessor 728 controls operation of the display 726, as well as overall operation of the mobile device 700, in response to actuation of keys on the keyboard 714 by a user. The microprocessor 728 is a non-limiting example of the processor 330 described with reference to Figure 3.

The mobile device 700 has a housing that may be elongated vertically, or may take on other sizes and shapes (including clamshell housing structures). The keyboard 714 may include a mode selection key, or other hardware or software for switching between text entry and telephony entry.

In addition to the microprocessor 728, other parts of the mobile device 700 are shown schematically. These include: a communications subsystem 770; a short-range communications subsystem 702; the keyboard 714 and the display 726, along with other input/output devices including a set of LEDS 704, a set of auxiliary I/O devices 706, a serial port 708, a speaker 711 and a microphone 712; as well as memory devices including a flash memory 716 and a Random Access Memory (RAM) 718; and various other device subsystems 720. The mobile device 700 may have a battery 721 to power the active elements of the mobile device 700. The mobile device 700 is in some embodiments a two-way radio frequency (RF) communication device having voice and data communication capabilities. In addition, the mobile device 700 in some embodiments has the capability to communicate with other computer systems via the Internet.

Operating system software executed by the microprocessor 728 is in some embodiments stored in a persistent store, such as the flash memory 716, but may be stored in other types of memory devices, such as a read only memory (ROM) or similar storage element. In addition, system software, specific device applications, or parts thereof, may be temporarily loaded into a volatile store, such as the RAM 718. Communication signals received by the mobile device 700 may also be stored to the RAM 718.

The microprocessor 728, in addition to its operating system functions, enables execution of software applications on the mobile device 700. A predetermined set of software applications that control basic device operations, such as a voice communications module 730A and a data communications module 730B, may be installed on the mobile device 700 during manufacture. In addition, a personal information manager (PIM) application module 730C may also be installed on the mobile device 700 during manufacture. The PIM application is in some embodiments capable of organizing and managing data items, such as e-mail, calendar events, voice mails, appointments, and task items. The PIM application is also in some embodiments capable of sending and receiving data items via a wireless network 710. In some embodiments, the data items managed by the PIM application are seamlessly integrated, synchronized and updated via the wireless network 710 with the device user's corresponding data items stored or associated with a host computer system.

In addition, a software application to perform a meeting place arrival time function 730D may be installed. The meeting place arrival time function 730D may implement any of the methods described herein for determining a meeting place between two mobile devices and an approximate time for one of the mobile devices to arrive at that meeting place.

As well, additional software modules, illustrated as another software module 730N, may be installed during manufacture.

Communication functions, including data and voice communications, are performed through the communication subsystem 770, and possibly through the short-range communications subsystem 702. The communication subsystem 770 includes a receiver 750, a transmitter 752 and one or more antennas, illustrated as a receive antenna 754 and a transmit antenna 756. The receiver 750 is a non-limiting example of the receiver 310 described with reference to Figure 3. In addition, the communication subsystem 770 also includes a processing module, such as a digital signal processor (DSP) 758, and local oscillators (LOs) 760. The specific design and implementation of the communication subsystem 770 is dependent upon the communication network in which the mobile device 700 is intended to operate. For example, the communication subsystem 770 of the mobile device 700 may be designed to operate with the Mobitex™, DataTAC™ or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access CDMA, Personal Communications Service (PCS), Global System for Mobile Communications (GSM), etc. Other types of data and voice networks, both separate and integrated, may also be utilized with the mobile device 700.

Some embodiments also comprise a GPS receiver 755 with an antenna 757 for receiving GPS data from one or more GPS satellites 711.

The GPS receiver 755 is in communication with the DSP 758.

Network access requirements vary depending upon the type of communication system. For example, in the Mobitex™ and DataTAC™ networks, mobile devices are registered on the network using a unique Personal Identification Number (PIN) associated with each device. In GPRS networks, however, network access is associated with a subscriber or user of a device. A GPRS device therefore requires a subscriber identity module, commonly referred to as a Subscriber Identity Module (SIM) card, in order to operate on a GPRS network.

When required network registration or activation procedures have been completed, the mobile device 700 may send and receive communication signals over the communication network 710. Signals received from the communication network 710 by the receive antenna 754 are routed to the receiver 750, which provides for signal amplification, frequency down conversion, filtering, channel selection, etc., and may also provide analog to digital conversion. Analog-to-digital conversion of the received signal allows the DSP 758 to perform more complex communication functions, such as demodulation and decoding. In a similar manner, signals to be transmitted to the network 710 are processed (e.g., modulated and encoded) by the DSP 758 and are then provided to the transmitter 752 for digital to analog conversion, frequency up conversion, filtering, amplification and transmission to the communication network 710 (or networks) via the transmit antenna 756.

In addition to processing communication signals, the DSP 758 provides for control of the receiver 750 and the transmitter 752. For example, gains applied to communication signals in the receiver 750 and the transmitter 752 may be adaptively controlled through automatic gain control algorithms implemented in the DSP 758.

In a data communication mode, a received signal, such as a text message or web page download, is processed by the communication subsystem 770 and is input to the microprocessor 728. The received signal is then further processed by the microprocessor 728 for an output to the display 726, or alternatively to some other auxiliary I/O devices 706. A device user may also compose data items, such as e-mail messages, using the keyboard 714 and/or some other auxiliary I/O device 706, such as a touchpad, a rocker switch, a thumb-wheel, or some other type of input device. The composed data items may then be transmitted over the communication network 710 via the communication subsystem 770.

In a voice communication mode, overall operation of the device is substantially similar to the data communication mode, except that received signals are output to a speaker 711, and signals for transmission are generated by a microphone 712. Alternative voice or audio I/O subsystems, such as a voice message recording subsystem, may also be implemented on the device 700. In addition, the display 726 may also be utilized in voice communication mode, for example, to display the identity of a calling party, the duration of a voice call, or other voice call related information.

The short-range communications subsystem 702 enables communication between the mobile device 700 and other proximate systems or devices, which need not necessarily be similar devices. For example, the short-range communications subsystem may include an infrared device and associated circuits and components, or a Bluetooth™ communication module to provide for communication with similarly-enabled systems and devices.

What has been described is merely illustrative of the application of the principles of methods, modules and devices described herein. Other arrangements and methods can be implemented by those skilled in the art without departing from the spirit and scope of the embodiments.

## Claims

1. A method in a first mobile device, the method comprising:
receiving location information for a second mobile device (110);
determining location information for the first mobile device (120);
determining a meeting place based on the location information of the first mobile device and the location information of the second mobile device (130);
calculating an approximate time for the first mobile device to travel to the meeting place (140); and
outputting the approximate time and a location of the meeting place to a user interface on the first mobile device (150).

2. The method of claim 1, further comprising displaying the meeting place on a map on a display on the first mobile device.

3. The method of claim 1 or 2, further comprising receiving an indication of a planned speed of travel of the first mobile device and wherein calculating the approximate time to travel comprises determining a route from the present location to the meeting place, determining the length of the route and determining the time required at the planned speed to arrive at the meeting place.

4. The method of claim 3, further comprising receiving an indication of a planned speed of travel of the second mobile device and the determining the meeting place is based at least on the planned speed of travel of the first mobile device and the planned speed of travel of the second mobile device.

5. The method of any one of claims 1 to 4, wherein determining the meeting place comprises selecting at least one of a present location of the second mobile device, a location identified as a point of interest in a map application on the first mobile device, and a location approximately at a midpoint between the present location of the first mobile device and a present location of the second mobile device.

6. The method of any one of claims 1 to 5, wherein determining the location information for the first mobile device comprises requesting the location information for the first mobile device from a location determination system.

7. The method of any one of claims 1 to 6, wherein determining the location information for the first mobile device comprises a global positioning system (GPS)chipset on the mobile device receiving the location information for the first mobile device from a plurality of GPS satellites.

8. The method of any one of claims 1 to 8, wherein receiving the location information for the second mobile device comprises receiving the respective location information during a voice call.

9. The method of any one of claims 1 to 8, wherein receiving the location information for the second mobile device comprises receiving the location information for the second mobile device in a data message over a wireless network.

10. The method of any one of claims 1 to 9, further comprising receiving updated location information for the first mobile device at a later time and calculating an updated travel time to the meeting place based on the updated location information.

11. A mobile device (300) comprising:
a receiver (310) for receiving location information for another mobile device;
a location determination system (330) for providing location information for the mobile device;
a processor (320)configured to determine a meeting place based on the location information of the mobile device and the location information of the other mobile device and to calculate an approximate time for the mobile device to travel to the meeting place; and
a user interface (340)for outputting the approximate time and a location of the meeting place.

12. The mobile device of claim 11, wherein the processor is further configured to implement a map application for displaying maps on the user interface.

13. The mobile device of claim 11 or 12, further comprising another receiver for receiving audio information over a wireless network concurrently with the mobile device receiving the location information for the other mobile device and a transmitter for transmitting audio information over the wireless network.

14. At least one tangible computer readable medium having computer readable instructions stored thereon that, when executed, implement a method in a first mobile device, the method comprising:
receiving location information for a second mobile device;
determining location information for the first mobile device;
determining a meeting place based on the location information of the first mobile device and the location information of the second mobile device;
calculating an approximate time for the first mobile device to travel to the meeting place; and
outputting the approximate time and a location of the meeting place to a user interface on the first mobile device.

15. The at least one tangible computer readable medium of claim 14, wherein the method is for execution by a processor on the first mobile device.

## Amended claims

### Amended claims in accordance with Rule 137(2) EPC.

**1.** A method in a first mobile device, the method comprising the steps of:
receiving location information for a second mobile device during a voice call with said second mobile device (110);
determining location information for the first mobile device (120);
determining a meeting place based on the location information of the first mobile device and the location information of the second mobile device (130);
calculating an approximate time for the first mobile device to travel to the meeting place (140); and
outputting the approximate time and a location of the meeting place to a user interface on the first mobile device during the voice call (150).

**2.** The method of claim 1, further comprising the step of displaying the meeting place on a map on a display on the first mobile device.

**3.** The method of claim 1 or 2, further comprising the step of receiving an indication of a planned speed of travel of the first mobile device and wherein the step of calculating the approximate time to travel comprises determining a route from the present location to the meeting place, determining the length of the route and determining the time required at the planned speed to arrive at the meeting place.

**4.** The method of claim 3, further comprising the step of receiving an indication of a planned speed of travel of the second mobile device and the determining the meeting place is based at least on the planned speed of travel of the first mobile device and the planned speed of travel of the second mobile device.

**5.** The method of any one of claims 1 to 4, wherein the step of determining the meeting place comprises the step of selecting at least one of a present location of the second mobile device, a location identified as a point of interest in a map application on the first mobile device, and a location at a midpoint between the present location of the first mobile device and a present location of the second mobile device.

**6.** The method of any one of claims 1 to 5, wherein the step of determining the location information for the first mobile device comprises requesting the location information for the first mobile device from a location determination system.

**7.** The method of any one of claims 1 to 6, wherein the step of determining the location information for the first mobile device comprises a global positioning system "GPS" chipset on the first mobile device receiving the location information for the first mobile device from a plurality of GPS satellites.

**8.** The method of any one of claims 1 to 7, wherein the step of receiving the location information for the second mobile device comprises the step of receiving the location information for the second mobile device in a data message over a wireless network.

**9.** The method of any one of claims 1 to 8, further comprising the step of receiving updated location information for the first mobile device at a later time and calculating an updated travel time to the meeting place based on the updated location information.

**10.** A mobile device (300) comprising:
a receiver (310) for receiving location information for another mobile device during a voice call with the another mobile device;
a location determination system (330) for providing location information for the mobile device;
a processor (320) configured to determine a meeting place based on the location information of the mobile device and the location information of the other mobile device and to calculate an approximate time for the mobile device to travel to the meeting place; and
a user interface (340) for outputting the approximate time and a location of the meeting place during the voice call.

**11.** The mobile device of claim 10, wherein the processor is further configured to implement a map application for displaying maps on the user interface.

**12.** The mobile device of claim 10 or 11, further comprising another receiver for receiving audio information over a wireless network concurrently with the mobile device receiving the location information for the other mobile device and a transmitter for transmitting audio information over the wireless network.

**13.** At least one tangible computer readable medium having computer readable instructions stored thereon that, when executed, implement a method in a first mobile device, the method comprising:
receiving location information for a second mobile device during a voice call with the second mobile device;
determining location information for the first mobile device;
determining a meeting place based on the location information of the first mobile device and the location information of the second mobile device;
calculating an approximate time for the first mobile device to travel to the meeting place; and
outputting the approximate time and a location of the meeting place to a user interface on the first mobile device during the voice call.

**14.** The at least one tangible computer readable medium of claim 13, wherein the method is for execution by a processor on the first mobile device.
